**Europäisches Patentamt**

**European Patent Office**

**Office européen des brevets**

(11) Veröffentlichungsnummer: **0 429 016 A1**

(12) # EUROPÄISCHE PATENTANMELDUNG

(21) Anmeldenummer: **90121940.2**

(22) Anmeldetag: **16.11.90**

(51) Int. Cl.5: **H02M 3/335**

(30) Priorität: **21.11.89 DE 3938583**

(43) Veröffentlichungstag der Anmeldung:
**29.05.91 Patentblatt 91/22**

(84) Benannte Vertragsstaaten:
**DE FR GB**

(71) Anmelder: **ABB CEAG Licht- und
Stromversorgungstechnik GmbH
Senator-Schwarz-Ring 26
W-4770 Soest(DE)**

(72) Erfinder: **Vollmer, Ludwig
Hedwigstrasse 31
W-4783 Anröchte(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

(54) **Netzgerät.**

(57) Netzgeräte mit Einzelwandlern zur rückwirkungsfreien Versorgung mehrerer Verbraucher erfordern einen relativ hohen Bauteileaufwand. Mit der Erfindung wird vorgeschlagen, bei Einzelwandlern mit einem ersten Schalttransistor, einem Wandlertransformator (51) und einem zweiten Schalttransistor (52) die Funktion der ersten Schalttransistoren in einem einzigen, für alle Einzelwandler gemeinsamen ersten Schalttransistor (3) zusammenzufassen und außerdem eine gemeinsame Freilaufdiode (6) anzuordnen.

## NETZGERÄT

Die Erfindung betrifft ein Netzgerat gemäß dem Oberbegriff des Anspruchs 1.

Solche Netzgeräte werden zur Stromversorgung von elektronischen Geräten, wie z.B. von Computern, verwendet. Sie dienen zur Umsetzung einer Netzspannung, also einer Wechselspannung, in eine Gleichspannung oder in mehrere unterschiedliche Gleichspannungen.

An das Netzgerät sollen zwei oder mehrere Verbraucher angeschlossen werden können, wobei keine gegenseitige Beeinflussung der Verbraucher durch wechselnde Lasten oder Abhängigkeiten durch unterschiedliche Belastungen auftreten dürfen. Zusätzliche Nachregler je Verbraucher, insbesondere sur individuellen Strombegrenzung, sollten vermeidbar sein, da sie zusätzliche Verlustleistung und größeres Gerätevolumen bedeuten.

Ein solches den Anforderungen genügendes Netzgerät kann durch Anordnung eines für alle Verbraucher gemeinsamen Gleichrichterteils und eines Wandlerteils mit je einem Gleichspannungs-Gleichspannungswandler je Verbraucher hergestellt werden.

Es ist allgemein bekannt, derartige Netzgeräte als Schaltnetzteile auszuführen, wobei Gleichspannungswandler mit Schalttransistoren verwendet werden. Schaltnetzteile haben eine Reihe von Vorteilen, da sie mit hoher Schaltfrequenz betrieben werden können, wodurch eingesetzte Transformatoren und Siebglieder klein dimensioniert werden können. Außerdem arbeiten solche Geräte mit hohem Wirkungsgrad.

Für die Gleichspannungswandler der Schaltnetzgeräte sind unterschiedliche Grundschaltungen, wie Sperrwandler, Durchflußwandler oder Gegentaktwandler bekannt. Diese Spannungswandler erfordern eine Drosselspule, die auch als Transformator ausgeführt werden kann, wodurch sowohl eine Potentialtrennung als auch eine Spannungsübersetzung erreicht wird.

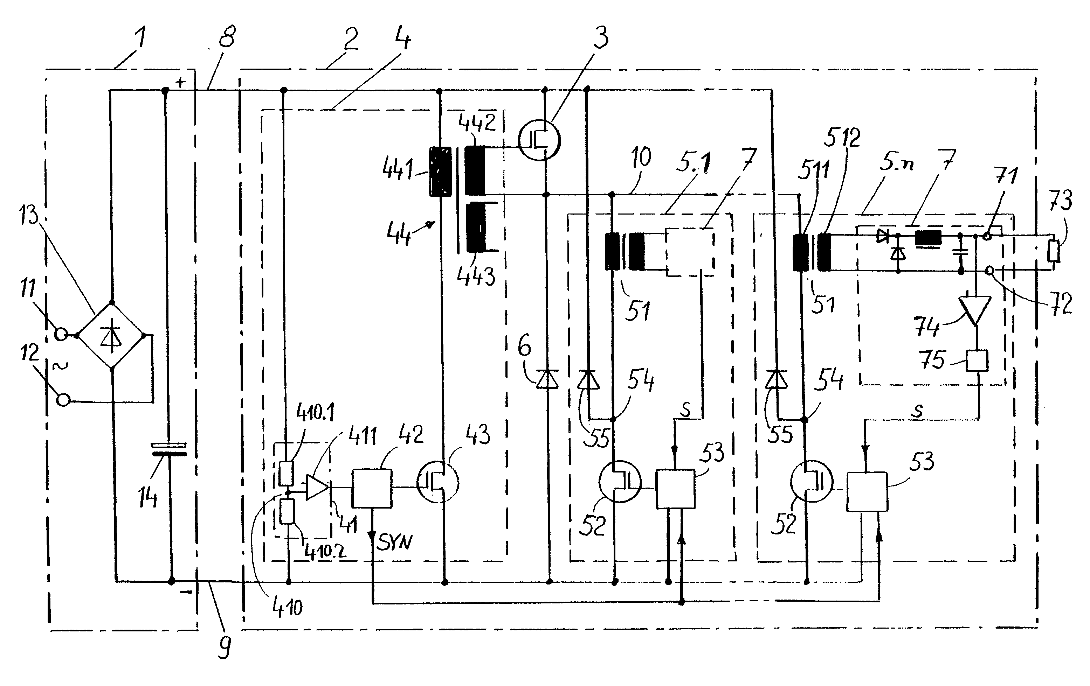

Die Erfindung geht von einem Netzgerät mit mehreren Gleichspannungswandlern aus, wobei die Gleichspannungswandler einen ersten Schalttransistor, einen Transformator und einen zweiten Schalttransistor enthalten. Eine solche Schaltungsvariante mit zwei Schalttransistoren ist aus J. Wüstehube, "Gleichspannungswandler für Schaltnetzteile", Elektronik 1978, Heft 4, Seiten 102 bis 107 (Druckschrift 1) Bild 7 und Bild 9 und zugehörigem Text bekannt. Bild 7 bezieht sich dort auf einen Sperrwandler und Bild 9 auf einen Druchflußwandler. Es ist zu erkennen, daß die primärseitige Schaltung für beide Wandlerarten gleich ist. Die unterschiedliche Betriebsart ergibt sich allein durch die Ausführung der Sekundärseite.

Die Schaltungsvariante mit zwei Schalttransistoren je Wandler hat den Vorteil, daß zwei Regelungen überlagert werden können, nämlich eine Ausregelung von Störungen, welche vom Netz her kommen und eine Reaktion auf lastseitige Störeinflüsse.

Neben vielen Vorteilen hat das bekannte Schaltnetzteil, welches mehrere Gleichspannungswandler aufweist, allerdings den Nachteil, daß ein relativ hoher Bauteileaufwand erforderlich ist.

Der Erfindung liegt daher die Aufgabe zugrunde, ein Netzgerät zu schaffen, welches einen geringeren Aufwand erfordert und trotzdem die bekannten positiven Eigenschaften der oben beschriebenen Netzgeräte aufweist.

Diese Aufgabe wird durch ein Netzgerät gelöst zur Stromversorgung wenigstens zweier Verbraucher, wobei das Netzgerät eine Eingangsgleichrichteranordnung und eine Gleichspannungswandleranordnung enthält, die Gleichspannungswandleranordnung je anschließbaren Verbraucher einen Einzelwandler für Sperrwandler oder Durchflußwandlerbetrieb aufweist, und jeder Einzelwandler einen von einem ersten und einem zweiten Schalttransistor geschalteten Transformator enthält, und wobei die Funktion der ersten Schalttransistoren der Einzelwandler in einem einzigen gemeinsamen ersten Schalttransistor vereinigt ist und an diesen gemeinsamen ersten Schalttransistor die Primärwicklungen der Transformatoren mit jeweils zugehörigem zweiten Schalttransistor sowie eine gemeinsame Freilaufdiode parallel angeschlossen sind.

Mit der Erfindung wird auf vorteilhafte Weise erreicht, daß netzseitige Störungen zentral für alle angeschlossenen Verbraucher mit einem einzigen gemeinsamen ersten Schalttransistor geregelt werden können und trotzdem lastseitige Störungen andere Verbraucher nicht beeinflussen. Der Bauteile- und Schaltungsaufwand ist wesentlich reduziert. Vorteilhafte Ausgestaltungen ergeben sich aus den Unteransprüchen. Gemäß einer solchen vorteilhaften Ausgestaltung kann mit Hilfe eines Synchronisiersignals aus einer Ansteuereinrichtung für den gemeinsamen ersten Schalttransistor eine synchronisierte Ansteuerung der zweiten Schalttransistoren erreicht werden. Mit einer weiteren Ausgestaltung wird vorgeschlagen, ein Ansteuersignal zur Ansteuerung des gemeinsamen Schalttransistors über einen Ansteuersignalübertrager auf den Steuereingang des ersten Schalttransistors zu geben, wobei der Ansteuersignalübertrager eine weitere Sekundärwicklung zur Bereitstellung einer Hilfsspannung aufweist.

Eine nähere Erläuterung der Erfindung und vorteilhafter Ausgestaltungen erfolgt anhand eines in der Zeichnung dargestellten Ausführungsbeispiels.

Die einzige Figur der Zeichnung zeigt die Schaltungsanordnung eines erfindungsgemäßen Netzgerätes.

Das Netzgerät enthält eine Eingangsgleichrichteranordnung 1 und eine Gleichspannungswandleranordnung 2.

Die Eingangsgleichrichteranordnung 1 enthält einen Gleichrichter 13, hier in Brückenschaltung, und einen dem Gleichspannungsausgang des Gleichrichters 13 parallelgeschalteten Glättungskondensator 14, der vorzugsweise als Elektrolytkondensator ausgeführt ist. Der Wechselspannungseingang des Gleichrichters 13 ist mit Netzanschlußklemmen 11, 12 verbunden. Die Ausgangsgleichspannung der Gleichrichteranordnung 1 ist über eine Plusleitung 8 und eine Minusleitung 9 der Gleichspannungswandleranordnung 2 zugeführt.

Die Gleichspannungswandleranordnung 2 enthält mehrere individuelle Wandlerteile 5.1 bis 5.n, wobei n der Anzahl der anzuschließenden Verbraucher entspricht. In der Zeichnung sind nur zwei individuelle Wandlerteile, nämlich 5.1 und 5.n dargestellt. Außerdem enthält die Gleichspannungswandleranordnung 2 einen gemeinsamen Teil, der aus einem für mehrere Einzelwandler gemeinsamen ersten Schalttransistor 3 und einer gemeinsamen Ansteuereinrichtung 4 besteht. Die Funktion der Einzelwandler der Gleichspannungswandleranornung 2 ergibt sich durch Zusammenwirkung der individuellen Wandlerteile 5.1 bis 5.n mit den gemeinsamen Teilen 3, 4 sowie einer gemeinsamen Freilaufdiode 6, wie unten noch erläutert wird.

Der gemeinsame erste Schalttransistor 3 kann beispielsweise ein MOS-FET sein.

Die gemeinsame Ansteuereinrichtung 4 enthält eine zentrale Regeleinrichtung 41, welche wiederum aus einem an die Plusleitung 8 und Minusleitung 9 angeschlossenen Spannungsteiler 410 mit den Teilerwiderständen 410.1 und 410.2 besteht. Die zentrale Regeleinrichtung 41 enthält außerdem einen ersten Operationsverstärker 411, welcher mit dem Ausgang des Spannungsteilers und mit einer nicht dargestellen Referenzspannungsquelle verbunden ist. Der Ausgang des ersten Operationsverstärkers 411 ist mit dem Eingang einer Steuereinrichtung 42 verbunden, deren Ausgang auf den Steuereingang eines Steuertransistors 43 führt. In der Steuereinrichtung 42 gebildete Steuersignale können z.B. von der Höhe der Gleichspannung am Glättungskondensator 14 abhängen. Die Ansteuereinrichtung 4 enthält weiterhin einen Ansteuersignalübertrager 44, dessen Primärwicklung 441 einerseits mit der Plusleitung 8 und andererseits über den Steuertransistor 43 mit der Minusleitung 9 verbunden ist. Die Sekundärwicklung 442 ist mit dem Steuereingang des gemeinsamen ersten Schalttransistors 3 und dessen Kollektor verbunden. Der Übertrager 44 weist außerdem eine Zusatzwicklung 443 auf, an welcher eine Hilfsspannung für hier nicht weiter zu beschreibende Steuerungszwecke abgegriffen werden kann.

Die individuellen Wandlerteile 5.1 bis 5.n enthalten jeweils einen Wandlertransformator 51, dessen Primärwicklung 511 einerseits mit einer am Kollektor des gemeinsamen ersten Schalttransistors 3 angeschlossenen Kollektorleitung 10 und andererseits über einen zum individuellen Wandlerteil 5.1 bis 5.n gehörenden zweiten Schalttransistor 52 mit der Minusleitung 9 verbunden ist. An dem Verbindungspunkt 54 zwischen Primärwicklung 511 und zweiten Schalttransistor 3 ist jeweils eine Freilaufdiode 55 angeschlossen. Der Steuereingang des zweiten Schalttransistors 52 ist jeweils mit dem Ausgang einer Wandlersteuereinrichtung 53 verbunden. Die Sekundärwicklung 512 des Wandlertransformators 51 gibt eine höherfrequente Rechteckspannung an einen Sekundärteil 7 des individuellen Wandlerteils 5.1 bis 5.n ab.

In der Zeichnung ist am Beispiel des individuellen Wandlerteils 5.n eine mögliche Ausführung des Sekundärteils 7 zur Realisierung eines Durchflußwandlers dargestellt. Dieser aus der Druckschrift 1, Bild 9 bekannte Aufbau des Sekundärteils 7 bedarf keiner weiteren Erläuterung. Es wurde eingangs auch schon erwähnt, daß durch entsprechende andere Ausführung des Sekundärteils auch ein Sperrwandler nach dem gleichen Prinzip realisierbar ist. An Gleichspannungsausgangsklemmen 71, 72 kann ein Verbraucher 73 angeschlossen werden. Zur Erfassung von Störungen in diesem Lastkreis und entsprechende Steuerung des zweiten Schalttransistors 52 kann nach einer vorteilhaften Ausgestaltung die Ausgangsspannung an den Ausgangsklemmen 71, 72 erfaßt und z.B. mit Hilfe eines zweiten Operationsverstärkers 74 und einem Potentialtrenner 75 ein Störsignal S gebildet werden, welches der Wandlerregeleinrichtung 53 zugeführt wird. Der Wandlerregeleinrichtung 53 ist außerdem für einen frequenzsynchronisierten Betrieb jeweils ein Synchronisiersignal SYN zugeführt, welches von der Steuereinrichtung 42 ausgegeben wird.

Die Funktion des in der Zeichnung dargestellten Netzgerätes wird nachstehend kurz und zusammenfassend beschrieben. Eine über die Netzanschlußklemmen 11, 12 zugeführte Wechselspannung wird in der Eingangsgleichrichteranordnung 1 gleichgerichtet. Netzseitige Störungen werden durch die zentrale Regeleinrichtung 41 erfaßt, welche ein daraus abgeleitetes Steuersignal auf die Steuereinrichtung 42 gibt. Die Steuereinrichtung 42 steuert mit höherfrequenten Impulsen den Steuertransistor 43 und gibt außerdem ein Synchronisiersignal SYN an die Wandlerregeleinrichtung 53 ab. Der Steuertransistor 43 schaltet einen durch die Primärwicklung 441 des Ansteuersignalübertragers 44 fließenden Strom mit relativ hoher Frequenz ein und aus, wodurch in der Sekundärwicklung 442 Ansteuersignale für den gemeinsamen ersten Schalttransistor 3 entstehen. Die Impulslänge der Ansteuersignale am Schalttransistor 3 wird von der zentralen Regeleinrichtung 41 und der Steuereinrichtung 42 bestimmt. Die vom Schalttransistor 3 auf die Kollektorleitung 10 gegebenen und durch die Primärwicklungen 511 der Wandlertransformatoren 51 fließenden Stromimpulse können jedoch individuell in den einzelnen Wandlern mit Hilfe der zweiten Schalttransistoren 52 verkürzt werden. Der zweite Schalttransistor 52 wird von der Regeleinrichtung 53 gesteuert, welcher Störsignale S aus dem Lastkreis und das Synchronisiersignal SYN als Eingangsgrößen zugeführt sind. Bei gesperrten Schalttransistoren 3, 52 fließt ein Entmagnetisierungsstrom über die Freilaufdioden 6 und 55.

Während bei einer Anordnung vollständiger Einzelwandler gemäß den im Stand der Technik bekannten Netzgeräte n mal ein erster Schalttransistor 3 und die Freilaufdiode 6 in gleicher Anzahl vorzusehen wäre, sind in der erfindungsgemäßen Anordnung diese Bauteile nur einmal vorhanden. Trotzdem ist durch das Zusammenspiel der gemeinsamen Schaltungsteile 4, 3, 6 mit den individuellen Wandlerteilen 5.1 bis 5.n die Funktion von Einzelwandlern gegeben.

## Ansprüche

1. Netzgerät zur Stromversorgung wenigstens zweier Verbraucher, wobei
- das Netzgerät eine Eingangsgleichrichteranordnung und eine Gleichspannungswandleranordnung enthält,
- die Gleichspannungswandleranordnung je anschließbaren Verbraucher einen Einzelwandler für Sperrwandler oder Durchflußwandlerbetrieb aufweist, und
- jeder Einzelwandler einen von einem ersten und einem zweiten Schalttransistor geschalteten Transformator enthält,
dadurch gekennzeichnet, daß die Funktion der ersten Schalttransistoren der Einzelwandler in einem einzigen gemeinsamen ersten Schalttransistor (3) vereinigt ist und an diesen gemeinsamen ersten Schalttransistor (3) die Primärwicklungen (511) der Transformatoren (51) mit jeweils zugehörigem zweiten Schalttransistor (52) sowie eine gemeinsame Freilaufdiode (6) parallel angeschlossen sind.

2. Netzgerät nach Anspruch 1, dadurch gekennzeichnet, daß eine Ansteuereinrichtung (4) zur Ansteuerung des gemeinsamen ersten Schalttransistors (3) vorhanden ist, welche ein Synchronisiersignal (SYN) abgibt, das zur Frequenzsynchronisierung der zweiten Schalttransistoren (52) genutzt ist.

3. Netzgerät nach Anspruch 1 oder 2, dadurch gekennzeichnet, daß ein Ansteuersignalübertrager (44) zur Übertragung eines Ansteuersignals auf den Steuereingang des gemeinsamen ersten Schalttransistors (3) vorhanden ist, welcher eine Zusatzwicklung (443) zur Bereitstellung einer Hilfsspannung aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 252 165 (SIEMENS)<br>* Zusammenfassung; Figur 1 *<br>– – – | 1 | H<br>02 M 3/335 |
| D,A | ELEKTRONIK. vol. 4, 1978, MUNCHEN DE Seiten 102 - 107; Wüstehube: "Gleichspannungswandler für Schaltnetzteile"<br>* Seiten 105 - 106; Figuren 7, 9 *<br>– – – – – | 1 | |

RECHERCHIERTE SACHGEBIETE (Int. Cl.5)

H 02 M

Der vorliegende Recherchenbericht wurde für alle Patentansprüche erstellt

| Recherchenort | Abschlußdatum der Recherche | Prüfer |
|---|---|---|
| Den Haag | 30 Januar 91 | VAN DEN DOEL J.C. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument